# EUROPEAN PATENT APPLICATION

(11) **EP 4 468 047 A1**
(43) Date of publication of application: **27.11.2024**
(21) Application number: 23777687.7
(22) Date of filing: 18.02.2023
(51) Int. Cl.: G02B 6/42

(54) **OPTICAL APPARATUS AND OPTICAL COMMUNICATION DEVICE**

(30) Priority: 31.03.2022 CN 202210345923
(71) Applicant: Huawei Technologies Co., Ltd., Shenzhen, Guangdong 518129 (CN)
(72) Inventor: WU, Yuanpeng, Shenzhen, Guangdong 518129 (CN); LI, Jin, Shenzhen, Guangdong 518129 (CN); LI, Tiance, Shenzhen, Guangdong 518129 (CN)
(74) Representative: Körber, Martin Hans
(86) International application number: PCT/CN2023/077021
(87) International publication number: WO 2023/185308

(57) **Abstract**

An optical apparatus is provided, and includes a cover body (300), a base (200), a mainboard (400), a bidirectional optical subassembly BOSA (500), a first thermal pad, and a second thermal pad. The BOSA (500) includes a TOSA (501) and a ROSA (502), the mainboard (400) is located between the cover body (300) and the base (200), the cover body (300) and the base (200) forms a cavity, and the BOSA (500), the first thermal pad, and the second thermal pad are all located in the cavity. The first thermal pad is disposed between the TOSA (501) and the cover body (300), and the second thermal pad is disposed between the ROSA (502) and the cover body (300). In this way, the first thermal pad and the second thermal pad each are in sufficient contact with the BOSA (500) and the cover body (300), and may transfer heat generated by the BOSA (500) to the cover body (300), and the cover body (300) may transfer the heat to an external device, thereby lowering an overall ambient temperature of the BOSA (500). In this way, the ambient temperature of the BOSA (500) meets an operating temperature requirement of the BOSA (500), thereby achieving a heat dissipation effect of the BOSA (500), and ensuring optical performance of the BOSA (500). An optical communication device including the foregoing optical apparatus is provided.

## Description

This application claims priority to Chinese Patent Application No. 202210345923.5, filed with the China National Intellectual Property Administration on March 31, 2022 and entitled "OPTICAL APPARATUS AND OPTICAL COMMUNICATION DEVICE", which is incorporated herein by reference in its entirety.

### TECHNICAL FIELD

This application relates to the field of optical communication technologies, and in particular, to a transmitter optical apparatus and an optical communication device.

### BACKGROUND

In an optical communication system, a high-performance bidirectional optical subassembly is a very important device. A bidirectional optical subassembly (bidirectional optical subassembly, BOSA) on board (BOSA on Board, BOB) module is a device widely used in the bidirectional optical subassembly. With continuous development of passive optical network (Passive Optical Network, PON) communication, a quantity of wireless fidelity (Wireless Fidelity, Wi-Fi) signal sources increases continuously. As a signal rate of the BOSA increases, power consumption of a high-speed BOSA increases, causing a great increase in heat. The heat may be conducted to a laser diode (laser diode, LD) inside the BOSA, affecting light emission precision of the BOSA.

### SUMMARY

Embodiments of this application provide an optical apparatus and an optical communication device. A temperature of a BOSA is reduced by using a plurality of heat dissipation manners, to finally achieve a heat dissipation effect of the BOSA, and further ensure light emission precision of the BOSA.

To achieve the foregoing objectives, the following technical solutions are used in embodiments of this application.

According to a first aspect, this application provides an optical apparatus, including a cover body, a base, a mainboard, a BOSA, a first thermal pad, and a second thermal pad. The BOSA includes a transmitter optical subassembly (Transmitting Optical Sub-assembly, TOSA) and a receiver optical subassembly (Receiving Optical Sub-assembly, ROSA), the mainboard is located between the cover body and the base, a cavity is formed inside after the cover body is connected to the base, and the BOSA, the first thermal pad, and the second thermal pad are all located in the cavity. The cover body, the base, and the mainboard may be fastened in a plurality of forms. For example, the cover body, the base, and the mainboard may be fastened as an entirety; or the cover body and the base may be separately fastened with the mainboard, and the TOSA and the ROSA may be separately connected to the mainboard through a flexible printed circuit. The first thermal pad is disposed between the TOSA and the cover body. In this way, the first thermal pad is in sufficient contact with each of the TOSA and the cover body, to transfer heat generated by the TOSA to the cover body. The second thermal pad is disposed between the ROSA and the cover body. In this way, the second thermal pad is in sufficient contact with each of the ROSA and the cover body, to transfer heat generated by the ROSA to the cover body. In addition, the cover body, the first thermal pad, and the second thermal pad are all made of thermally conductive materials. The first thermal pad and the second thermal pad may alternatively be made of thermally conductive elastic materials. In this way, the first thermal pad may be fully squeezed by the TOSA and the cover body, and the second thermal pad may be fully squeezed by the ROSA and the cover body.

In the new optical apparatus provided in embodiments of the present invention, a first thermal pad is disposed between the ROSA and the cover body (that is, a housing) of the optical apparatus, and the second thermal pad is disposed between the TOSA and the cover body of the optical apparatus. Therefore, heat generated by the BOSA may be transferred to the cover body through the first thermal pad and the second thermal pad, and the cover body may transfer the heat to an external device. In this way, an overall ambient temperature of the BOSA can be reduced, so that the ambient temperature of the BOSA meets an operating temperature requirement of the BOSA, and a heat dissipation effect of the BOSA is achieved, thereby ensuring optical performance of the BOSA.

In a possible implementation, the optical apparatus further includes a first component boss and a second component boss, where the first component boss is disposed on the base, the second component boss is disposed on the cover body, and the BOSA is located between the first component boss and the second component boss. In this case, a first hole needs to be provided on the mainboard at a corresponding position of the first component boss, and the first component boss may protrude from the first hole. In this case, the first thermal pad is disposed between the TOSA and the second component boss, the second thermal pad is disposed between the ROSA and the second component boss, the first thermal pad can transfer the heat generated by the TOSA to the cover body through the second component boss, and the second thermal pad can transfer the heat generated by the ROSA to the cover body through the second component boss. The BOSA may be mounted and fastened between the first component boss and the second component boss by disposing the first component boss on the base and disposing the second component boss on the cover body, to achieve a better fastening effect of the BOSA. In this case, the heat generated by the BOSA is transferred to the cover body through sufficient contact between the first thermal pad and the first component boss, and sufficient contact between the second thermal pad and the second component boss.

In a possible implementation, the optical apparatus further includes a drive module, a first drive boss, a second drive boss, and a third thermal pad, where the first drive boss is disposed on the base, the second drive boss is disposed on the cover body, the drive module is disposed on the mainboard, and the drive module is located between the mainboard and the second drive boss. More specifically, the drive module may be mounted and fastened on the mainboard. In this case, the third thermal pad is disposed on the drive module and in contact with the cover body. In this way, heat generated by the drive module may be transferred to the cover body by disposing the third thermal pad between the second drive boss and the drive module.

In a possible implementation, the optical apparatus further includes a fourth thermal pad and a fifth thermal pad, where the fourth thermal pad is disposed between the TOSA and the first component boss, the fifth thermal pad is disposed between the ROSA and the first component boss, the fourth thermal pad can transfer the heat generated by the TOSA to the base through the first component boss, and the fifth thermal pad can transfer the heat generated by the ROSA to the base through the first component boss. The heat generated by the BOSA may be transferred to the base through the first component boss through the fourth thermal pad and the fifth thermal pad that are disposed between the BOSA and the first component boss, to improve heat dissipation efficiency of the BOSA.

In a possible implementation, the first component boss, the second component boss, the fourth thermal pad, and the fifth thermal pad are made of thermally conductive materials, for example, any one of iron, copper, aluminum, copper-aluminum alloy, and the like.

In a possible implementation, the optical apparatus further includes a sixth thermal pad, where the sixth thermal pad is disposed between the mainboard and the first drive boss. The sixth thermal pad may transfer the heat generated by the drive module to the base through the mainboard and the first drive boss. The heat generated by the drive module may be transferred to the base through the first drive boss through the sixth thermal pad disposed between the mainboard and the first drive boss, so that heat dissipation efficiency of the drive module can be improved.

In a possible implementation, the first drive boss, the second drive boss, the third thermal pad, and the sixth thermal pad are made of thermally conductive materials, for example, any one of iron, copper, aluminum, copper-aluminum alloy, and the like.

In a possible implementation, the cover body and the mainboard are sealed through form-in-place dispensing, and the base and the mainboard are sealed through the form-in-place dispensing. Sealing performance between the cover body and the mainboard and between the base and the mainboard may be further improved by using a sealing technology of the form-in-place dispensing. In this way, a capability of the optical apparatus to shield an electromagnetic signal can be improved.

In a possible implementation, the optical apparatus further includes a baffle plate, where the baffle plate is located on one side of the base, and the baffle plate includes a U-shaped plate. The cover body includes a notch, and the notch and an opening of the U-shaped plate jointly form a channel through which an optical cable of the BOSA passes. The U-shaped plate is opposite to a side of the cover body. A gap of the optical apparatus may be reduced as much as possible by disposing the baffle plate and the notch at a position where the optical cable of the BOSA passes through, to improve sealing performance of the optical apparatus. In addition, because the U-shaped plate is disposed opposite to the side of the cover body, propagation of an electromagnetic signal may be blocked. Therefore, a capability of the optical apparatus to shield an electromagnetic signal can be improved by using the foregoing design.

In a possible implementation, the cover body and the base are made of metal materials, and the metal materials are good materials for shielding an electromagnetic signal.

In a possible implementation, that the TOSA and the ROSA are separately connected to the mainboard is specifically: the TOSA and the ROSA are separately connected to the mainboard through a flexible printed circuit.

According to a second aspect, this application provides an optical communication device, including the optical apparatus in various implementations of the first aspect.

In a possible implementation, the optical communication device is specifically an optical line terminal or an optical terminal unit.

### BRIEF DESCRIPTION OF DRAWINGS

FIG. 1 is a schematic structural diagram of a passive optical network system;
FIG. 2 is a schematic cross-sectional structural diagram of an optical apparatus according to an embodiment of this application;
FIG. 3 is a schematic three-dimensional structural diagram of a base according to an embodiment of this application;
FIG. 4 is a schematic planar structural diagram of a base according to an embodiment of this application;
FIG. 5 is a schematic three-dimensional structural diagram of a cover body according to an embodiment of this application;
FIG. 6 is a schematic planar structural diagram of a cover body according to an embodiment of this application;
FIG. 7 is a schematic structural diagram of a mainboard according to an embodiment of this application;
FIG. 8 is a schematic three-dimensional structural diagram of a BOSA according to an embodiment of this application; and
FIG. 9 is a schematic diagram of an optical communication device according to an embodiment of this application.

### DESCRIPTION OF EMBODIMENTS

Embodiments of this application relate to a receiver optical subassembly, a transmitter optical subassembly, a combo transceiver subassembly, a combo optical module, and a passive optical network system. The following briefly describes concepts involved in the foregoing embodiments.

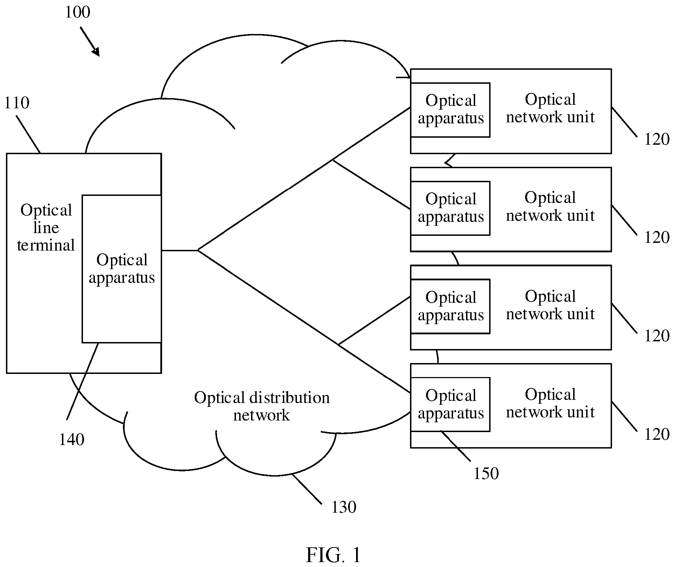

With unique features such as an ultra-high bandwidth and low electromagnetic interference, optical transmission is a mainstream solution for modern communication. In particular, for networks newly established currently, an access network represented by fiber to the home is being deployed on a large scale. In an overall situation that an optical network is fully popularized, a passive optical network (Passive Optical Network, PON) has been widely used. As shown in FIG. 1, the passive optical network includes an optical line terminal (Optical Line Terminal, OLT) 110 located at a central control station (for example, an equipment room), a plurality of optical network units (Optical Network Units, ONUs) 120 installed at a user site, and an optical distribution network (Optical Distribution Network, ODN) 130. Each OLT 110 is connected to the plurality of ONUs 120 in a point-to-multipoint manner by using the ODN 130. The OLT 110 and the ONUs 120 may communicate with each other by using a TDM mechanism, a WDM mechanism, or a TDM/WDM hybrid mechanism. A direction from the OLT 110 to the ONUs 120 is defined as a downlink direction, and a direction from the optical network units 120 to the OLT 110 is defined as an uplink direction. The passive optical network system 100 may be a communication network that requires no active component to implement data distribution between the OLT 110 and the ONUs 120. In a specific embodiment, the data distribution between the OLT 110 and the ONUs 120 may be implemented by using a passive optical component (for example, an optical splitter) in the ODN 130. The passive optical network system 100 may be an asynchronous transfer mode (Asynchronous Transfer Mode, ATM) PON system or a broadband passive optical network (broadband passive optical network, BPON) system defined in the ITU-T G.983 standard, a gigabit-capable passive optical network (Gigabit-Capable Passive Optical Network, GPON) system defined in the ITU-T G.984 series standards, an ethernet passive optical network (ethernet passive optical network, EPON) defined in the IEEE 802.3ah standard, a wavelength division multiplexing passive optical network (WDM PON) system, or a next generation passive optical network (NGAPON system, for example, a 10G GPON system, a 25G GPON system, a 50G GPON system, and a 100G GPON system defined in the ITU system standard, and a 10G EPON system, a 25GEPON system, a 50GEPON system, and a TDM/WDM hybrid PON system defined in the IEEE system standard). All content of various passive optical network systems defined by the foregoing standards is incorporated in this application document by reference in their entireties. All content of various passive optical network systems defined by the foregoing standards is incorporated in this application document by reference in their entireties.

Generally, the OLT 110 is located at a central position (for example, a central office Central Office, CO), and may manage the plurality of ONUs 120 in a unified manner. The OLT 110 may act as a medium between the ONU 120 and an upper-layer network (not shown in the figure), forward data received from the upper-layer network to the optical network units 120 as downlink data, and forward uplink data received from the ONU 120 to the upper-layer network. A specific structure configuration of the OLT 110 may vary along with a specific type of the passive optical network system 100. In an embodiment, the OLT 110 may include an optical apparatus 140. The optical apparatus 140 may convert downlink data into a downlink optical signal, send the downlink optical signal to the ONU 120 by using the ODN 130, receive an uplink optical signal that is sent by the ONU 120 by using the ODN 130, and convert the uplink data signal into an electrical signal.

The ONUs 120 may be disposed at a user-side position (such as customer premises) in a distributed manner. The ONU 120 may be a network device configured to communicate with the OLT 110 and a user. Specifically, the ONU 120 may act as a medium between the OLT 110 and the user. For example, the ONU 120 may forward downlink data received from the OLT 110 to the user, and forward data received from the user to the OLT 110 as uplink data. A specific structure configuration of the ONU 120 may vary along with a specific type of the passive optical network 100. In an embodiment, the ONU 120 may include an optical apparatus 150. The optical apparatus 150 is configured to receive the downlink optical signal that is sent by the OLT 110 by using the ODN 130, and send the uplink optical signal to the OLT 110 by using the ODN 130. It should be understood that in this application document, a structure of the ONU 120 is similar to a structure of an optical network terminal (Optical Network Terminal, ONT), so that in solutions provided in this application document, the optical network unit and the optical network terminal are interchangeable.

The ODN 130 may be a data distribution system, and may include an optical fiber, an optical coupler, an optical multiplexer/demultiplexer, an optical splitter, and/or another device. In an embodiment, the optical fiber, the optical coupler, the optical multiplexer/demultiplexer, the optical splitter, and/or the another device each may be a passive optical component. Specifically, the optical fiber, the optical coupler, the optical multiplexer/demultiplexer, the optical splitter, and/or the another device may be a device that distributes a data signal between the OLT 110 and the ONUs 120 where no power supply support is required. In addition, in another embodiment, the ODN 130 may further include one or more processing devices, for example, an optical amplifier or a relay device (Relay device). In a branch structure shown in FIG. 1, the ODN 130 may specifically extend from the OLT 110 to the plurality of ONUs 120, but may alternatively be configured as any other point-to-multipoint structure.

A BOSA may be directly mounted on a mainboard of an optical communication device (the OLT, the ONT, or the like) in the design manner that the optical communication device (the OLT, the ONT, or the like) adopts an optical apparatus. A manufacturing process of an optical module may be omitted. In this way, a structure of the optical communication device may be simplified, and costs of the optical communication device are reduced, which is beneficial to promotion of the optical network. The BOSA mainly includes a TOSA and a receiver optical subassembly ROSA. The TOSA converts an external electrical signal into an optical signal and transmits the optical signal in an optical fiber. The ROSA receives the optical signal transmitted through the optical fiber and converts the optical signal into an electrical signal. Electrical pins of the ROSA and the TOSA are electrically connected to the mainboard of the optical communication device. The following describes in detail a structure and a connection relationship of each component of the optical apparatus.

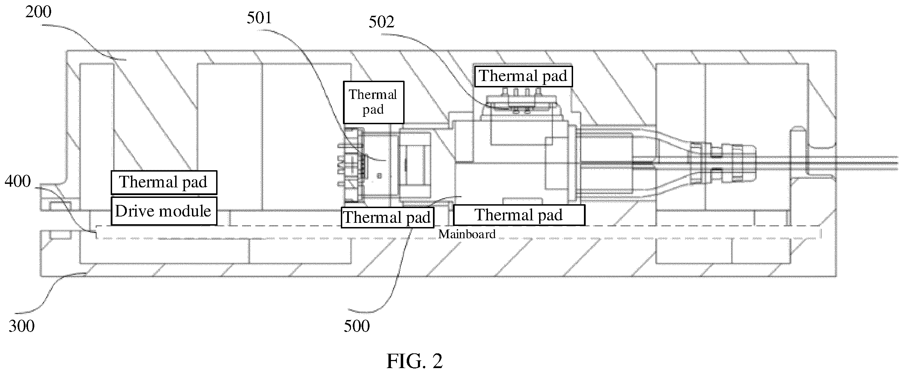

FIG. 2 provides an optical apparatus according to an embodiment of the present invention. The optical apparatus may specifically include a base 200, a cover body 300, a mainboard 400, a BOSA 500, and a drive module 600. The base 200 and the cover body 300 may be separately fastened with the mainboard 400. The base 200, the cover body 300, and the mainboard 400 may be fastened together, so that the optical apparatus is integrated as a whole. There may be a plurality of fastening manners, for example, by using a screw and a bolt, glue, or a buckle. The optical apparatus has a cavity inside, and the BOSA 500 and the drive module 600 are located in the cavity of the optical apparatus. The mainboard 400 is located between the base 200 and the cover body 300. The following further describes each part of the optical apparatus.

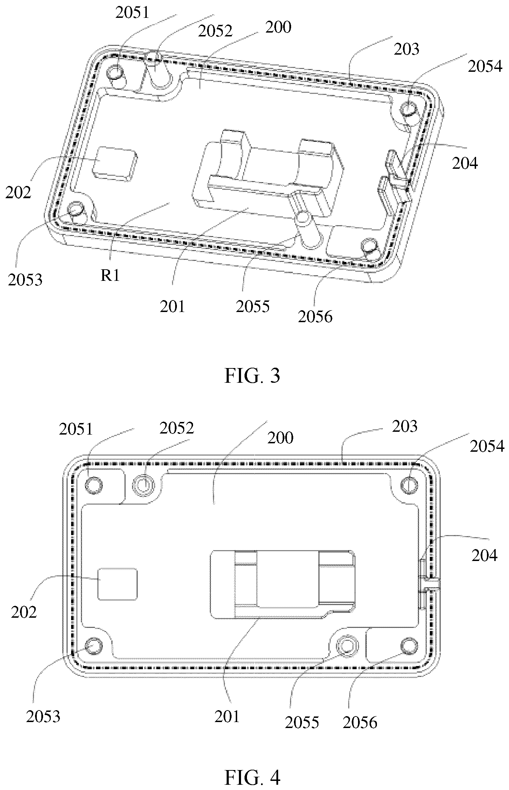

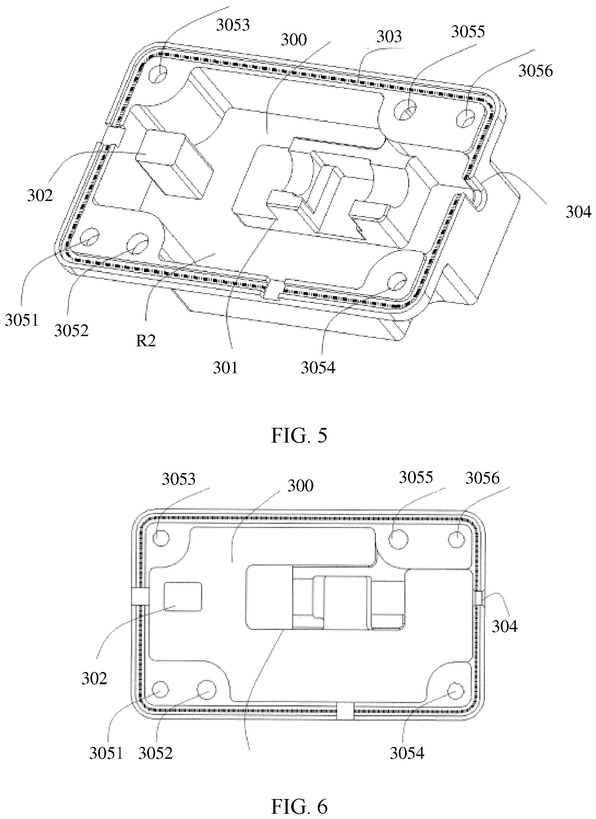

Refer to the base 200 shown in FIG. 3 and FIG. 4, and the cover body 300 shown in FIG. 5 and FIG. 6. An accommodation space R1 is provided in the base 200. A first component boss 201 and a first drive boss 202 are disposed in the accommodation space R1. An accommodation space R2 is provided in the cover body 300. A second component boss 301 and a second drive boss 302 are disposed in the accommodation space R2. The BOSA 500 may be disposed on the first component boss 201. The drive module 600 is disposed on the first drive boss 202. The first drive boss 202 is located at a corresponding position of the drive module of the mainboard. To be specific, the first drive boss 202 may be located below a position at which the drive module is located on the mainboard. After the base 200, the cover body 300, and the mainboard 400 are assembled and fastened, the accommodation space R1 of the base 200 and the accommodation space R2 of the cover body 300 form the cavity of the optical apparatus. The BOSA 500 is disposed between the first component boss 201 and the second component boss 301. To be specific, an appearance structure of the BOSA 500 adapts to an appearance structure obtained after the first component boss 201 and the second component boss 301 are combined. The drive module 600 is disposed between the mainboard 400 and the second drive boss 302. In this embodiment of the present invention, appearance structures of the first component boss 201 and the second component boss 301 and an appearance structure of the drive module 600 are not limited. Structures in the accompanying drawings are used as examples. Both the first component boss 201 and the second component boss 301 are disposed in the accommodation spaces of the optical apparatus, so that the BOSA 500 located between the first component boss 201 and the second component boss 301 is also located in the accommodation space of the optical apparatus. Similarly, the drive module 600 is also located in the accommodation space of the optical apparatus. The first component boss 201 and the first drive boss 202 may be independent structures, and are fastened on the base 200. The first component boss 201 and the first drive boss 202 may alternatively be partially or entirely integrated on the base 200. In this case, the first component boss 201 and/or the first drive boss 202 may be considered as a part of the base 200. The second component boss 301 and the second drive boss 302 may be independent structures, and are fastened on the cover body 300. The second component boss 301 and the second drive boss 302 may alternatively be partially or completely integrated on the cover body 300. In this case, the second component boss 301 and/or the second drive boss 302 may be considered as a part of the cover body 300.

The following uses a specific example to describe a manner of fastening between the base 200, the cover body 300, and the mainboard 400. The base 200 and the cover body 300 each may be provided with a plurality of screw holes. The screw holes may be evenly or randomly distributed around the base 200 and the cover body 300. A quantity of screw holes is not limited. Distribution positions of screw holes on the cover body 300 are corresponding to distribution positions of screw holes on the base 200. A screw may be inserted into a group of corresponding screw holes of the base 200 and the cover body 300. The base 200 and the cover body 300 are fastened by using the screw. For example, the base 200 shown in FIG. 3 and FIG. 4 includes screw holes 2051, 2053, 2054, and 2056. The cover body 300 shown in FIG. 5 and FIG. 6 includes screw holes 3051, 3053, 3054, and 3056. As shown in FIG. 3 to FIG. 6, there are four groups of screw holes: the screw hole 2051 and the screw hole 3051, the screw hole 2053 and the screw hole 3053, the screw hole 2054 and the screw hole 3054, and the screw hole 2056 and the screw hole 3056. To precisely align corresponding screw holes of the base 200 and the cover body 300 in a fastening process, at least one group of a positioning rod and a positioning hole are further disposed on the base 200 and the cover body 300. One of the positioning rod and the positioning hole is disposed on the base 200, and the other is disposed on the cover body 300. For example, as shown in FIG. 3 and FIG. 4, positioning rods 2052 and 2055 are disposed on the base 200; as shown in FIG. 5 and FIG. 6, positioning holes 3052 and 3055 are provided on the cover body 300. In this way, in a process of assembling the base 200 and the cover body 300, the positioning rods 2052 and 2055 are first inserted into the positioning holes 3052 and 3055 respectively, to align each group of screw holes of the cover body 300 and the base 200. For a manner of fastening between the base 200 and the mainboard 400, and a manner of fastening between the cover body 300 and the mainboard 400, refer to the foregoing example. No further description is provided herein. In addition, a fastening manner using a buckle, glue, or the like is common, and is not described herein.

Still refer to FIG. 3 and FIG. 5. A baffle plate 204 is further disposed on one side of a housing of the base 200. The entire baffle plate 204 protrudes from a top surface of an opening of the base 200. The baffle plate 204 includes a U-shaped plate and a bump. The U-shaped plate and the bump may be integrated. An opening of the U-shaped plate has a same direction as an opening of the accommodation space of the base 200. The bump is located on the side of the housing of the base 200. The bump protrudes from the U-shaped plate. A bottom of the opening of the U-shaped plate and a top of the bump are integrated. A notch 304 is disposed on one side of a housing of the cover body 300. After the cover body 300 is assembled with the base 200, the bump of the baffle plate 204 is inserted into the notch 304 and a portion of space is left. The notch 304 and the opening of the U-shaped plate of the baffle plate 204 form a channel through which an optical cable passes. After the BOSA 500 is mounted on the optical apparatus, an optical cable of the BOSA 500 may pass through the channel formed by the notch 304 and the opening of the U-shaped plate of the baffle plate 204. To avoid electromagnetic interference to the optical apparatus from an external electronic device and electromagnetic interference to the optical apparatus from an electronic device, the optical apparatus needs to have a good capability to shield electromagnetic interference. The baffle plate 204 of the base 200 and the notch of the cover body 300 are designed, so as to maximize sealing performance of the base 200 and the cover body 300, thereby reducing outward electromagnetic radiation energy of the optical apparatus, and improving a capability of the optical apparatus to shield an electromagnetic signal. In addition, the U-shaped plate is disposed opposite to the side of the housing of the cover body 300, and the two are relatively close, that is, the side of the housing of the cover body 300 blocks most of the U-shaped plate. For example, the U-shaped plate is parallel or approximately parallel to the side at which the notch of the cover body 300 is located, and a distance between the two may be only 2 mm. Therefore, the U-shaped plate blocks the housing of the cover body 300, and the capability of the optical apparatus to shield an electromagnetic signal can be further improved.

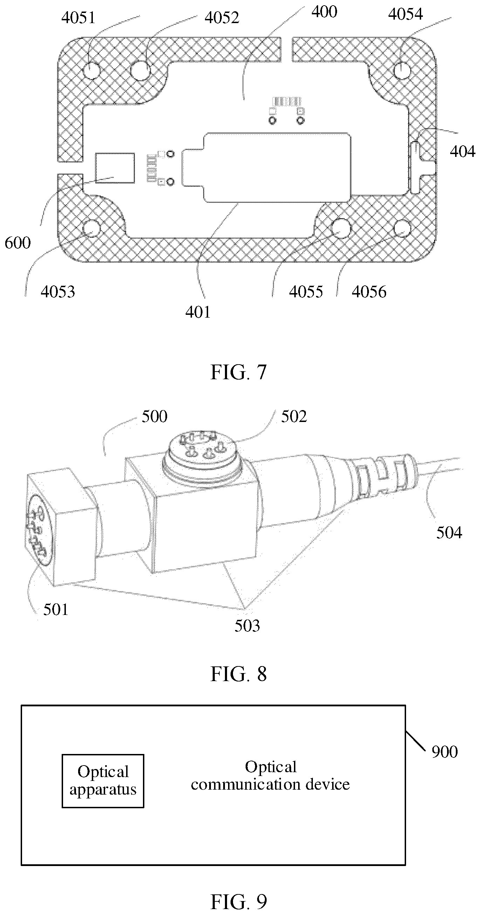

As shown in FIG. 7, the mainboard 400 is generally presented as a sheet or a block. The mainboard 400 is located between the base 200 and the cover body 300. The mainboard 400 may be a double-sided copper sheet. Various circuits may be designed on the mainboard 400 based on a requirement of the optical communication device. The mainboard 400 may be a circuit mainboard of an ONT or an OLT. The mainboard 400 may alternatively be a circuit mainboard of another optical communication device. For example, the mainboard 400 may be disposed with a BIAS circuit configured to provide laser conduction. The mainboard 400 may be disposed with a modulation circuit configured to provide a modulation current to drive a laser. The mainboard 400 may be disposed with an automatic gain control circuit configured to keep power and an extinction ratio stable. Because the mainboard 400 is a mature product, and a circuit structure of the mainboard 400 has a plurality of designs, the circuit structure of the mainboard 400 is not shown in detail in the accompanying drawings. The drive module 600 may be specifically a driver chip or a circuit, for example, a driver chip of a laser. This is not specifically limited herein. The drive module 600 may be mounted on the mainboard 400. Because the BOSA 500 is located between the base 200 and the cover body 300, the first component boss 201 bearing the BOSA 500 needs to pass through the mainboard 400, and hole opening processing needs to be performed on the mainboard 400 at a corresponding position (corresponding to the first component boss 201). To be specific, a first hole 401 is provided on the mainboard 400 at the corresponding position of the first component boss 201, that is, the first component boss 201 located on the base 200 is exposed from the mainboard 400 through the first hole 401. In addition, a second hole 4051, a third hole 4053, a fourth hole 4054, and a fifth hole 4056 may be further provided on the mainboard 400 at corresponding positions of the screw holes 3051, 3053, 3054, and 3056 respectively. A sixth hole 4052 and a seventh hole 4055 are further provided on the mainboard 400 at corresponding positions of the positioning rods 2052 and 2055 respectively. An eighth hole 404 may be further provided on the mainboard 400 at a corresponding position of the baffle plate 204. In this way, the baffle plate 204 may protrude from the mainboard 400. The boss or the baffle plate located on the base 200 may protrude from the mainboard 400, and the screw may further pass through the hole corresponding to the screw hole by providing opening holes of different sizes on the mainboard 400. The base 200, the cover body 300, and the mainboard 400 are fastened together. The first drive boss 202 located in the accommodation space of the base 200 does not need to protrude from the mainboard 400. A purpose of disposing the first drive boss 202 is to dispose a thermal pad.

As shown in FIG. 8, the BOSA 500 includes a TOSA 501, a ROSA 502, a housing 503, and an optical cable 504. The TOSA 501 is embedded into the housing 503 from a first side surface of the housing 503. The ROSA 502 is embedded into the housing 503 from a second side surface of the housing 503. The first side surface and the second side surface may be in a vertical relationship. An appearance structure of the housing 503 is not limited. For example, the housing 503 is a possible appearance structure. The optical cable 504 enters the housing from one end of the housing 503. The housing 503 further includes a WDM module (not shown in the figure) and the like inside. A laser included in the TOSA 501 converts an electrical signal into an optical signal. The optical signal is transmitted to an optical fiber of the optical cable 504 through the WDM module, and is transmitted outward through the optical fiber of the optical cable 504. The laser is an active device. An external optical signal is transmitted to the optical fiber of the optical cable 504, and the optical signal is transmitted to the ROSA 502 through the WDM. A photoelectric detector of the ROSA 502 converts the optical signal into an electrical signal. The photoelectric detector is also an active device. Amain function of the WDM module is to separate a sent optical signal from a received optical signal. For specific implementations and structures of the WDM module, the laser, and the optoelectronic detector, refer to many mature products existing in the current technology. No further limitations are imposed in the present invention. The BOSA 500 may be fastened between the first component boss 201 and the second component boss 301 through a process such as soldering or silver glue bonding. The drive module 600 may be fastened between the mainboard 400 and the second drive boss 302 through a process such as soldering or silver glue bonding.

The TOSA 501 and the ROSA 502 may further include a plurality of pins. The TOSA 501 may electrically connect the pin of the TOSA 501 to the mainboard 400 through a first flexible printed circuit (Flexible Printed Circuit Board, FPC). The ROSA 502 may electrically connect the pin of the ROSA 502 to the mainboard 400 through a second FPC. The first FPC and the second FPC may be fastened on the mainboard 400 through a process such as soldering or silver adhesive bonding.

Because the laser, the optoelectronic detector, and the drive module 600 are all active devices, the TOSA 501, the ROSA 502, and the drive module 600 generate heat in a working process. If the heat is not dissipated in time, optical performance of the TOSA 501 and the ROSA 502 is affected. As a result, an ambient temperature of the BOSA 500 shall not exceed an operating temperature range of the BOSA 500. When the ambient temperature of the BOSA 500 exceeds a permitted operating temperature range of the BOSA 500, the optical performance of the TOSA 501 or the ROSA 502 is greatly affected. For example, a wavelength of an optical signal transmitted by the TOSA 501 is deviated. As a result, the heat generated by the BOSA 500 needs to be dissipated. In embodiments of the present invention, a thermal pad is disposed between the cover body 300 and each of the TOSA 501, the ROSA 502, and the drive module 600. In this way, the heat generated by the BOSA 500 and the drive module 600 may be conducted to the cover body 300 through the thermal pads. The cover body 300 and the housing of the BOSA 500 are also thermally conductive. The cover body 300 further transfers the heat to the outside of the optical apparatus, to implement cooling and heat dissipation for the BOSA 500 and the drive module 600. To achieve a better heat dissipation effect, thermal pads may be further disposed between the TOSA 501 or the ROSA 502 and the base 200. The base 200 further transfers the heat to the outside of the optical apparatus. The thermal pads, the housing of the BOSA 500, the base 200, and the cover body 300 may be made of thermally conductive materials with relatively good thermal conductivity. Generally, the thermally conductive materials may include any one of metal materials such as iron, aluminum, copper, or copper-aluminum alloy. For example, the thermally conductive material of the first component boss 201, the second component boss 301, the first drive boss 202, the second drive boss 302, the base 200, or the cover body 300 may be high thermally conductive die casting aluminum with a thermal conductivity coefficient greater than 160 W/mK, and the thermal pads may be elastic metal with a thermal conductivity coefficient greater than 8 W/mK. For ease of description, the thermal pad in contact with the TOSA 501 and the second component boss 301 on the cover body 300 is referred to as a first thermal pad, the thermal pad in contact with the ROSA 502 and the second component boss 301 on the cover body 300 is referred to as a second thermal pad, the thermal pad in contact with the drive module 600 and the second drive boss 302 on the cover body 300 is referred to as a third thermal pad, the thermal pad in contact with the TOSA 501 and the first component boss 201 on the base 200 is referred to as a fourth thermal pad, the thermal pad in contact with the ROSA 502 and the first component boss 201 on the base 200 is referred to as a fifth thermal pad, and the thermal pad in contact with the mainboard 400 and the first drive boss 202 on the base 200 is referred to as a sixth thermal pad. A shape of the thermal pad may be sheet-shaped, so that the thermal pad may also be referred to as a heat sink, a thermal pad, a heat dissipation block, or the like. The thermal pad may also be elastic. In this way, the thermal pad may be fully squeezed between any two thermal conductors, to implement sufficient contact between the thermal pad and the thermal conductor. Although there is contact between the BOSA 500 and the first component boss 201 of the base 200, between the BOSA 500 and the second component boss 301 of the cover body 300, and between the drive module 600 and the second drive boss 302 of the cover body 300, due to designs of respective structures, insufficient contact may occur. As a result, heat dissipation effects of the BOSA 500 and the drive module 600 are not obvious. The thermal pads may be in sufficient contact with the foregoing components, to fully conduct the heat of the BOSA 500 and the drive module 600.

One surface of the first thermal pad is in sufficient contact with the TOSA 501 to implement a thermal connection, and the other surface of the first thermal pad is in sufficient contact with the second component boss 301 to implement a thermal connection. One surface of the second thermal pad is in sufficient contact with the ROSA 502 to implement a thermal connection, and the other surface of the second thermal pad is in sufficient contact with the second component boss 301 to implement a thermal connection. One surface of the third thermal pad is in sufficient contact with the drive module 600 to implement a thermal connection, and the other surface of the third thermal pad is in sufficient contact with the second drive boss 302 to implement a thermal connection. One surface of the fourth thermal pad is in sufficient contact with the TOSA 501 to implement a thermal connection, and the other surface of the fourth thermal pad is in sufficient contact with the first component boss 201 to implement a thermal connection. One surface of the fifth thermal pad is in sufficient contact with the ROSA 502 to implement a thermal connection, and the other surface of the fifth thermal pad is in sufficient contact with the first component boss 201 to implement a thermal connection. One surface of the sixth thermal pad is in sufficient contact with the mainboard 400 to implement a thermal connection, and the other surface of the sixth thermal pad is in sufficient contact with the first drive boss 202 to implement a thermal connection. The thermal connection refers to that two components are in contact with each other (a contact manner is not limited) to implement heat transfer. To implement a better heat transfer, a contact area between the two components shall be as large as possible. Thermal connection manners between the various thermal pads and the components are mainly to closely attach the thermal pads and the components together, to implement sufficient contact therebetween. In addition, because soldering or silver glue can better transfer heat, and the BOSA 500 is fastened between the first component boss 201 and the second component boss 301 through soldering or silver glue bonding, the heat generated by the BOSA 500 may be transmitted to the base 200 through the first component boss 201, and the heat generated by the BOSA 500 may be transmitted to the cover body 300 through the second component boss 202. In addition, because the drive module 600 is fastened between the mainboard 400 and the second drive boss 302 through soldering or silver glue bonding, the heat generated by the drive module 600 may be transmitted to the cover body 300 through the second drive boss 302. In addition, the first drive boss 202 is closely attached to the mainboard 400 at a corresponding position of the drive module 600. The heat generated by the drive module 600 may be further transmitted to the first drive boss 202 through the mainboard 400, and further transmitted to the base 200 through the first drive boss 202. In embodiments of the present invention, in the optical apparatus, an optimized heat dissipation effect of the BOSA at a temperature higher than 10°C may be implemented by using the foregoing method, to ensure that the ambient temperature of the BOSA does not increase significantly, and ensure light emission precision of the TOSA.

In addition, because a closed space is formed between the base 200, the cover body 300, and the mainboard 400, the base 200, the cover body 300, and the mainboard 400 are all made of metal materials, and a closed metal space has a relatively good shielding effect on a radio signal, the optical apparatus has a relatively good shielding effect on a radio signal as an entirety. However, because the base 200, the cover body 300, and the mainboard 400 are fastened together through non-integrated molding, to achieve a better shielding effect, the base 200 and the mainboard 400, and the cover body 300 and the mainboard 400 are sealed through form-in-place (FIP, form-in-place) dispensing. Shapes obtained through dispensing are shown in 203 or 303. The FIP dispensing is to precisely control an automation device by using a computer, and directly apply fluid rubber to an upper surface and a lower surface of the mainboard 400 made of a metal material, and perform curing under a specific condition. In this way, possible gaps between the base 200 and the mainboard 400 and between the cover body 300 and the mainboard 400 can be reduced. An electromagnetic signal in the glue of the optical apparatus is shielded. In embodiments of the present invention, a shielding effect of 10 dB can be achieved for a high-frequency signal above 25 GHz.

Referring to FIG. 9, an embodiment of the present invention further provides an optical communication device 900. The optical communication device 900 is mainly configured to implement optical-to-electrical and electrical-to-optical conversion, to be specific, to convert a sent data signal into an optical signal and send the optical signal to a peer end through an optical fiber, and after receiving an optical signal sent by the peer end from the optical fiber and converting the optical signal into an electrical signal, recover received data from the electrical signal. The optical communication device 900 includes the optical apparatus described in the embodiments corresponding to FIG. 2 to FIG. 8. This is not described herein again. The optical communication device 900 may be an OLT. The optical communication device 900 may alternatively be an ONT. Definitely, the optical communication device 900 further includes another module, for example, a media access control (Media Access Control, MAC) module or a computing chip for logical operation processing.

In the descriptions of this specification, the described specific features, structures, materials, or characteristics may be combined in a proper manner in any one or more of embodiments or examples.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An optical apparatus, comprising a cover body, a base, a mainboard, a bidirectional optical subassembly BOSA, a first thermal pad, and a second thermal pad, wherein the BOSA comprises a transmitter optical subassembly TOSA and a receiver optical subassembly ROSA, wherein
the mainboard is located between the cover body and the base;
a cavity is comprised between the cover body and the base, the BOSA, the first thermal pad, and the second thermal pad are all located in the cavity, and the TOSA and the ROSA are separately connected to the mainboard;
the first thermal pad is disposed between the TOSA and the cover body, and the first thermal pad is configured to transfer heat generated by the TOSA to the cover body; and
the second thermal pad is disposed between the ROSA and the cover body, and the second thermal pad is configured to transfer heat generated by the ROSA to the cover body.

2. The optical apparatus according to claim 1, further comprising a first component boss and a second component boss, wherein the first component boss is disposed on the base, the second component boss is disposed on the cover body, and the BOSA is located between the first component boss and the second component boss;
that the first thermal pad is disposed between the TOSA and the cover body, and the first thermal pad is configured to transfer heat generated by the TOSA to the cover body is specifically: the first thermal pad is disposed between the TOSA and the second component boss, and the first thermal pad is configured to transfer the heat generated by the TOSA to the cover body through the second component boss; and
that the second thermal pad is disposed between the ROSA and the cover body, and the second thermal pad is configured to transfer heat generated by the ROSAto the cover body is specifically: the second thermal pad is disposed between the ROSA and the second component boss, and the second thermal pad is configured to transfer the heat generated by the ROSA to the cover body through the second component boss.

3. The optical apparatus according to claim 1 or 2, further comprising a drive module, a first drive boss, a second drive boss, and a third thermal pad, wherein the first drive boss is disposed on the base, the second drive boss is disposed on the cover body, the drive module is disposed on the mainboard, and the drive module is located between the mainboard and the second drive boss; and
the third thermal pad is disposed on the drive module and in contact with the cover body, and the third thermal pad is configured to transfer heat generated by the drive module to the cover body.

4. The optical apparatus according to claim 2, further comprising a fourth thermal pad and a fifth thermal pad, wherein
the fourth thermal pad is disposed between the TOSA and the first component boss, and the fourth thermal pad is configured to transfer the heat generated by the TOSA to the base through the first component boss; and
the fifth thermal pad is disposed between the ROSA and the first component boss, and the fifth thermal pad is configured to transfer the heat generated by the ROSA to the base through the first component boss.

5. The optical apparatus according to claim 4, wherein the first component boss, the second component boss, the fourth thermal pad, and the fifth thermal pad are made of thermally conductive materials.

6. The optical apparatus according to claim 3, further comprising a sixth thermal pad, wherein
the sixth thermal pad is disposed between the mainboard and the first drive boss, and the sixth thermal pad is configured to transfer the heat generated by the drive module to the base through the mainboard and the first drive boss.

7. The optical apparatus according to claim 6, wherein the first drive boss, the second drive boss, the third thermal pad, and the sixth thermal pad are made of thermally conductive materials.

8. The optical apparatus according to any one of claims 1 to 7, wherein the cover body and the mainboard are sealed through form-in-place FIP dispensing, and the base and the mainboard are sealed through the FIP dispensing.

9. The optical apparatus according to any one of claims 1 to 8, further comprising a baffle plate, wherein the baffle plate is located on one side of the base, and the baffle plate comprises a U-shaped plate;
the cover body comprises a notch, and the notch and an opening of the U-shaped plate jointly form a channel through which an optical cable of the BOSA passes; and
the U-shaped plate is disposed opposite to a side of the cover body.

10. The optical apparatus according to any one of claims 1 to 9, wherein the cover body and the base are made of metal materials.

11. The optical apparatus according to any one of claims 1 to 10, wherein the cover body, the first thermal pad, and the second thermal pad are made of thermal materials.

12. The optical apparatus according to any one of claims 1 to 11, wherein that the TOSA and the ROSA are separately connected to the mainboard is specifically: the TOSA and the ROSA are separately connected to the mainboard through a flexible printed circuit.

13. An optical communication device, comprising the optical apparatus according to any one of claims 1 to 12.

14. The optical communication device according to claim 13, wherein the optical communication device is specifically an optical line terminal or an optical terminal unit.
